Europäisches Patentamt

European Patent Office

Office européen des brevets

(19)

(11) **EP 0 423 995 B1**

(12) **EUROPEAN PATENT SPECIFICATION**

(45) Date of publication and mention
of the grant of the patent:
**11.03.1998 Bulletin 1998/11**

(51) Int Cl.$^6$: **H01B 3/44**, C08F 8/22

(21) Application number: **90310971.8**

(22) Date of filing: **05.10.1990**

(54) **Low dissipation-factor fluorocarbon resins and cables prepared therefrom**

Fluorkohlenstoffharze geringen Verlustes und damit hergestellte Kabel

Résines fluorocarbonées à faible facteur de dissipation et câbles fabriqués avec ces résines

(84) Designated Contracting States:
**DE FR GB IT NL SE**

(30) Priority: **06.10.1989 US 418406**

(43) Date of publication of application:
**24.04.1991 Bulletin 1991/17**

(73) Proprietor: **E.I. DU PONT DE NEMOURS AND COMPANY**
**Wilmington Delaware 19898 (US)**

(72) Inventors:
• **Piekarski, Stanley**
  **Marietta, Ohio 45750 (US)**

• **Randa, Stuart Karl**
  **Wilmington, Delaware 19803 (US)**
• **Reifschneider, David Paul**
  **Centerville, Delaware 19807 (US)**

(74) Representative: **Jones, Alan John et al**
**CARPMAELS & RANSFORD**
**43 Bloomsbury Square**
**London, WC1A 2RA (GB)**

(56) References cited:
**EP-A- 0 220 910**      **GB-A- 2 143 237**
**US-A- 4 626 587**      **US-A- 4 687 708**
**US-A- 4 743 658**

## Description

This invention relates to a process for improving the dissipation factor of a melt processable copolymer of tetrafluoroethylene, and to a process for preparing insulated cables having improved electrical insulation properties over a wide range of frequencies.

Fluorocarbon resins are used as electrical insulators, particularly for low-loss coaxial cables and other high-frequency transmission media or circuit components. Copolymers of tetrafluoroethylene (TFE) and hexafluoropropylene (HFP), for example, have been used in such applications. Although such copolymers have excellent high-temperature properties and environmental resistance, the electrical properties, particularly the dissipation factors, of such resins are not as good as would be desired for cables to be used in certain microwave and radio frequency applications. The present invention, therefore, provides a process of preparing a cable with improved high frequency transmission properties over a broad range of frequencies.

U.S. Patent 4,560,829 discloses a coaxial cable in which the electrical insulation is a fluoropolymer such as a tetrafluoroethylene copolymer . The copolymer is preferably one which has a loss tangent less than 0.0010 at 10 GHz, and can be TFE/HFP copolymer or a copolymer of TFE with perfluoroalkoxyalkene. The fluoropolymer is foamed using a foaming agent having the formula $C_nF_{2n+2}$.

U.S. Patent 4,626,587, Morgan et al., discloses a process for reducing the backbone instability of a copolymer of TFE and HFP, by subjecting the copolymer to high shear in a twin-screw extruder. Thereafter the pellets obtained are exposed to fluorine gas to improve the color and eliminate the remaining unstable endgroups.

U.S. Patent 4,743,658, Imbalzano et al., discloses a copolymer of TFE and perfluoro(alkyl vinyl) ether substantially free of unstable end groups. The unstable end groups are virtually eliminated by treatment of the polymer with fluorine from a variety of fluorine radical generating compounds, preferably fluorine gas, optionally diluted with an inert gas such as nitrogen.

## SUMMARY OF THE INVENTION

The present invention is as set forth in the Claims.

## BRIEF DESCRIPTION OF THE FIGURE

The Figure shows dissipation factor as a function of frequency for a number of resins of the present invention.

## DETAILED DESCRIPTION OF THE INVENTION

The polymers useful in the processes of the present invention are melt processable fluoropolymers based on tetrafluoroethylene (TFE) as the predominant monomer. Although polytetrafluoroethylene (PTFE) itself has excellent electrical properties, it is not generally suitable for use in electrical cable applications because it is not melt processable. Nevertheless, incorporation of minor amounts, namely less than 5% by weight based on the weight of the copolymer, of comonomers can result in a copolymer which is melt processable and which retains many of the desirable electrical and thermal properties of PTFE. The polymer used in the present invention is based on such a copolymer of TFE and a perfluorinated comonomer, namely at least one perfluoro(n-alkyl vinyl) ether wherein the alkyl group has 1 to 5 carbon atoms. Preferably the n-alkyl group is propyl. Of course, blends of such polymers may be equally well used.

The amount of the comonomer or comonomers present should be sufficient to provide a copolymer which is melt processable, but not so much that the copolymer loses significant structural or electrical properties. Loss of structural properties is related to the reduction of melting point and molecular weight which occurs upon addition of such comonomers, and will, of course, vary with the amount and identity of the comonomer. Those with longer chains will have a larger effect on the melting point than those with shorter chains. The amount of comonomer added should be low enough that the melting point of the copolymer is at least 250°C and preferably not below about 260-270°C. As illustration, a copolymer of TFE and 3.9% perfluoro(propyl vinyl ether) (PPVE) has a melting point of about 308°C.

In addition to considerations of thermal performance, the amount of the comonomer should be limited in order to retain superior electrical performance over a broad frequency range. It has been found that when the amount of comonomer is less than 5% by weight, the dissipation factor of the resin is improved, as compared to resins having higher comonomer levels.

When the comonomer is PPVE (or a mixture of PPVE with other comonomers), the PPVE should be present in an amount of less than 5%, as stated above. This limit provides both adequate physical and thermal properties and superior electrical properties. Preferably the PPVE comonomer should be present in an amount of about 4% or less.

When the comonomer is a mixture of HFP and PPVE, it is preferred that the total amount of the two comonomers is less than about 8% by weight and the amount of the HFP is less than about 6% by weight.

The improvement in dissipation factor which is achieved by limiting the amount of comonomer is most apparent at comparatively low frequencies, in the 1 MHz region. (1 MHz = $10^6$ cycles per second.) For transmission of e.g. television signals, however, the frequency region of 100 MHz to 10 GHz is also important. It has been found that treatment of the copolymers defined above with fluorine greatly reduces the dissipation factor at such higher frequencies. Although not intending to be bound by any theory, it is believed that such a fluorination step converts various functional end groups of the copolymer to $-CF_3$ groups. It is believed that it is the functional end groups that are responsible for much of the dielectric loss at high frequencies in the untreated polymer. Therefore an important part of the present invention is the fluorination of the polymer after polymerization in order to remove substantially all of these groups. A level of about 50 end groups other than $-CF_3$ per million carbon atoms can be reasonably detected by infrared spectroscopy, as described in more detail in U.S. Patent 4,675,380. Thus the polymer should have fewer than about 50 and preferably fewer than about 20 such groups per million carbon atoms.

The fluorination process is normally conducted at elevated temperatures, in order to permit complete reaction of end groups. (Temperature above room temperature is believed to permit diffusion of fluorine into the structure of the polymer to permit encounter with the end groups.) Temperatures of at least 200°C are normally used. But the temperature should preferably be below the softening temperature of the polymer, in order to avoid problems with agglomeration. Fluorination may be performed by treatment with gaseous fluorine, either alone or in comixture with an unreactive gas, such as nitrogen, or by the use of an alternative fluorination agent. The polymer, during the fluorination process, may be in the form of pellets, beads, porous beads, or fluff. Suitable fluorination processes are described in more detail in U.S. Patent 4,743,658.

The presence of terminal groups such as $-CF_2H$ can also be avoided by means other than post-polymerization fluorination. For example, in the polymerization process itself, initiators can be used which provide a terminal $-CF_3$ group under appropriate conditions. Examples of such initiators include fluorine ($F_2$), difluorodiazine ($N_2F_2$), perfluoroalkyl peroxides such as $CF_3-(CF_2)_n-O-O-(CF_2)_m-CF_3$, as reported by R. S. Porter and G. H. Cady in the Journal of the American Chemical Society, _79_, 5638 (1955), perfluoroacyl peroxides such as $(CF_3-(CF_2)_n-COO)_2$, as reported in U.S. Patent 3,528,952, perfluoroacyl hypofluorites such as $F-(CF_2)_n-COOF$, as reported in U.S. Patent 4,588,796, the reaction product of hexafluorpropylene trimers and fluorine, $((CF_3)_2CF)_2(CF_3CF_2)C\cdot$, as disclosed in U.S. Patent 4,626,608, perfluoroacyl peroxides based on hexafluoropropylene oxide, $(C_3F_7-O-CF(CF_3)-COO)_2$ with $C_3F_7$ groups either linear or branched, as disclosed by Z. Chengxue et al. in the Journal of Organic Chemistry, _47_, 2009 (1982), difluoramines such as $C_3F_7-C(CF_3)_2NF_2$, perfluorazo compounds such as $((CF_3)_2CFN)_2$, perfluorosulfonyl azides such as $CF_3SO_2N_3$, perfluoro acid chlorides such as $C_3F_7COCl$, perfluoroalkyl hypofluorites such as $CF_3OF$, and so on.

Resins such as these with improved dissipation factors over a broad frequency range are useful as wire and cable coating compositions, and are particularly useful as insulation in coaxial cables, the construction of which is well known. A coaxial cable comprises a central conductive element or wire, usually of a metal such as copper. The central element is surrounded by an insulating medium, which in turn is surrounded by an outer conductive element, which may be, for example, a metallic foil, a woven or braided composite wire, or a drawn aluminum, copper, or other metallic tube. The outer conductive element can also be encased in further protective insulation.

Coaxial cables can be prepared by melt extruding around a central conductor a foamable polymer composition of at least one of the fluorinated polymers described above, preferably with a foaming agent such as nitrogen or a chlorofluorcarbon such as $CF_2HCl$ and optionally other traditional additives such as boron nitride. The extrusion is conducted at a temperature sufficient to cause the foaming agent to expand after the polymer exits the extruder die, thus providing a foamed core insulation about the central conductor. Thereafter an outer conductive metallic layer or shield is placed around the polymer layer. Preparation of coaxial cables with foamed core insulation components is described in more detail in U.S. Patent 3,072,583.

The present invention is also useful for preparing "twisted pairs" cables. These cables are similar to coaxial cables in that a central conductor is surrounded by low-loss insulation, except that a plurality, normally two, of such conductors are twisted together. There is optionally another conductor around the outside of the pair as a shield, as well as an overall insulating jacket.

Cables thus prepared using the specified polymers as insulation have improved electrical signal transmission properties. The attenuation of a signal upon passage through a coaxial cable is the sum of a loss due to the conductor material itself and the attenuation due to the dielectric loss of the core insulation. At high frequencies, the dielectric loss comprises an increasingly important fraction of the total attenuation, so the importance of minimizing dielectric loss due to the insulator is apparent. Insulator dielectric loss is proportional to the following relationship:

$$L = 0.092 \times F \times (DC)^{\frac{1}{2}} \times DF$$

where L is the dielectric loss in decibels per meter, F is the frequency in MHz, DC is the dielectric constant of the insulator, and DF is the dissipation factor. It is evident from this equation that insulation with a lower dissipation factor will provide cables with a lower overall dielectric loss, and this effect is be more pronounced at higher frequencies. It is just at these higher frequencies, i.e., 100 MHz and above, that the polymers of the present invention show the greatest improvement in dissipation factor. As a result, cables prepared from these resins show particularly improved transmission properties at high frequencies.

It is observed that use of foamed insulation for cables is often desirable, in order to take advantage of the superior insulator properties of air, i.e. its a dielectric constant of about 1.00 and dissipation factor of about 0. (Most solid homo- and copolymers of TFE have a dielectric constant of approximately 2.0-2.1.) Thus the effective dielectric constant and dissipation constant of a foamed polymer insulator are reduced proportionally to the void content. For this reason the use of foamed polymers, as described above, is an especially preferred embodiment of the present invention.

Comparative Example 1

A sample of commercial TFE-HFP copolymer, containing about 12.4% by weight HFP copolymer is examined. The copolymer is compression molded at 350°C into a film 0.1 mm thick and examined by infrared spectroscopy using a Nicolet Model 5DX Fourier transform infrared spectrometer. The ratio of the absorbance at 982 $cm^{-1}$ to that at 2367 $cm^{-1}$ ("IR ratio") is 3.85. The dissipation factor of this same resin is measured as a function of frequency on a plaque about 2.5 mm (0.1 inch) thick. The dissipation factor is measured by one or more methods, depending on the frequency of interest. Such methods are well known to those skilled in the art, and are described, for example, in "Dielectric Materials and Applications" by Arthur Von Hippel, MIT and Wiley & Sons, 1954, the disclosure of which is incorporated herein by reference. For measurements from 1 kHz to 40 MHz, a capacitance bridge method is used, which is also described in ASTM D 150. This method uses electrodes mounted on a micrometer for accurate dimensional determination. For measurements from 40 MHz to 100 MHz, the reentrant cavity, susceptance variation method is used. For measurements from 135 MHz to 5 GHz, the standing wave method using a coaxial line is used. From 5 to 40 GHz the standing wave method in a circular hollow wave guide is used. The latter two methods are also similar to procedures described in ASTM D-2520.

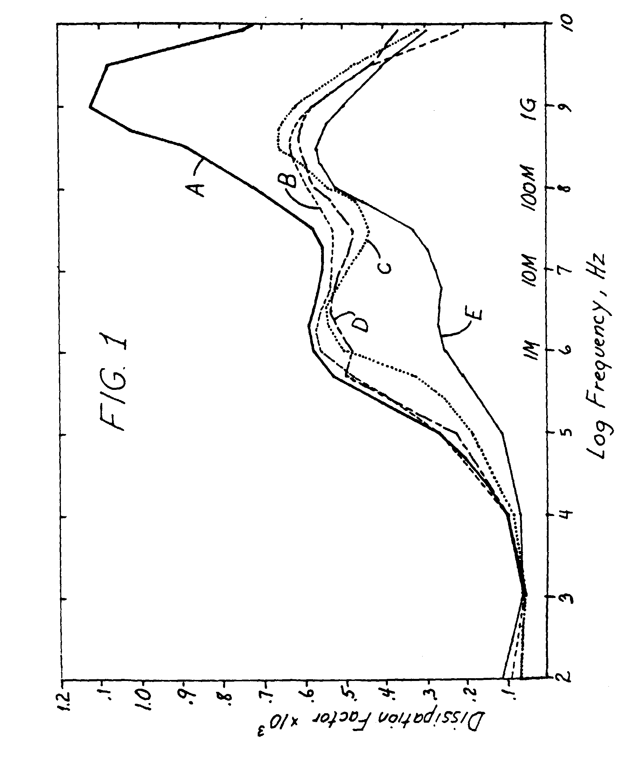

The results of these measurements are shown in Table I and in Figure 1 as curve A.

Comparative Example 2

A sample of TFE-HFP copolymer, having an IR ratio of 3.24, which corresponds to about 10.4 weight % HFP comonomer, is fluorinated as described in U.S. Patent 4,743,658, Example 1. Measurement of the dissipation factor as in Comparative Example 1 gave the results shown in Table I and Figure 1 (curve D). The combination of fluorination and reduced amount of HFP provides a material with significantly reduced dissipation factor throughout the frequency range, particularly at higher frequencies.

Comparative Example 3

A polymer similar to that of Comparative Example 1, except having an IR ratio of about 3.75, is fluorinated as in Comparative Example 2. The results of measurement of the dissipation factor are shown in Figure 1 as curve B.

Comparative Examples 4 and 5.

Copolymers of TFE with 3.9 weight % PPVE, having a melt viscosity at 372°C of 4.25 x $10^4$ poise (Comparative 4) or 2.2 x $10^4$ (Comparative 5) are similarly tested. The results are shown in Table I. Although the dissipation factor at low frequencies is much better than that of Comparative Example 1, at 450 MHz and above there is little or no improvement.

Example 1.

The copolymer of Comparative Example 5 is fluorinated as in Comparative Example 2 and tested as above. The results are shown in Table I. The fluorine treatment reduces the dissipation factor at 450 MHz to about 42% of its original value.

Example 2.

A copolymer of TFE with 4.0 weight % HFP and 1.25 weight % PPVE is fluorinated as in Comparative Example 2 and tested as above. The results in Table I and Figure 1 (curve E) show excellent dissipation factors at all frequencies.

| TABLE I[1] | | | | | | |
|---|---|---|---|---|---|---|
| | | Dissipation Factor (X10[4]) | | | | |
| Ex. | Polymer | 1 MHz | 100 MHz | 500 MHz | 1 GHz | 10 GHz |
| C1 | TFE/12.4%HFP | 5.73 | 7.20 | 10.20 | 11.20 | 8.40 |
| C2 | TFE/10.4%HFP(Fl) | 5.15 | 5.70 | 6.05 | 5.70 | 3.50 |
| C4 | TFE/3.9%PPVE | 0.87 | 5.55 | 8.30 | 9.75 | 10.00 |
| C5 | " | - | - | 8.54[2] | - | - |
| 1 | TFE/3.9%PPVE(Fl) | - | - | 3.66[2] | - | - |
| 2 | TFE/4.0%HFP/1.25%PPVE(Fl) | 2.53 | 5.20 | 5.54 | 5.00 | 2.70 |

1. A hyphen (-) indicates that the measurement was not made. (Fl) indicates fluorine treatment.

2. measured at 450 MHz.

Comparative Example 6.

A copolymer of TFE with HFP, having an IR ratio of 3.5, obtained from Daikin (designated as NP-20), is fluorinated as in Comparative Example 2 and tested as above. The results, shown as Curve C in Figure 1, are similar to those of Comparative Example 2. The subtle differences in the details of the shapes of the two curves may be the result of different methods of manufacture, residual impurities, etc.

Comparative Example 7

The fluorinated polymer of Comparative Example 2 is melt extruded onto a 2.8 mm (0.109 inch) diameter copper wire using chlorodifluoromethane as the blowing agent and boron nitride as a nucleating agent, to form a foamed layer of insulation on the wire. The combined thickness of the wire plus insulation is 11.4 mm (0.450 inch). This operation is carried out according to the teaching of U.S. Patent 3,072,583. The foamed polymer has about 65% voids.

The cable thus made is shielded with aluminum foil in a manner known in the art. The total attenuation of the shielded cable is measured at different frequencies by using a high-frequency network analyzer according to standard measurement procedures. The dielectric attenuation is calculated from the total attenuation using the formula

$$A = (0.435/Z_o)(1/d + 1/D) (F)^{\frac{1}{2}} + 2.78P(K)^{\frac{1}{2}}F$$

where A is the total attenuation in decibels per 30.5 m (100 feet), the first term is the conductor attenuation, and the second term is the dielectric attenuation. $Z_o$ is the characteristic impedance, d is the diameter of the inner conductor and D is the outside diameter of the insulation layer both in units of 25.4 mm (inches), F is the frequency in megahertz, P is the power factor or dissipation factor, and K is the dielectric constant of the foam insulation. The cable so prepared exhibits significantly reduced dielectric attenuation over a wide spectrum of frequencies compared to similar cable prepared using the polymer of Comparative Example 1.

**Claims**

1. Use of a process for improving the dissipation factor of a melt processible copolymer of tetrafluoroethylene with at least one copolymerizable perfluoro(n-alkyl vinyl) ether wherein the alkyl group has 1 to 5 carbon atoms such as e.g. perfluoro(propyl vinylether) (PPVE), wherein the PPVE is contained in an amount less than 5.0% by weight based on the weight of the copolymer and the amount of comonomer is sufficiently low that the melting point of the copolymer is at least 250°C, said process comprising fluorinating the copolymer at above room temperature until said copolymer has less than 50 end groups other than -CF$_3$ per million carbon atoms.

2. Use according to claim 1 wherein the fluorinated copolymer contains less than 20 end groups other than -CF$_3$ per million carbon atoms.

3. Use according to claim 1 or claim 2 wherein said temperature is from 200°C to below the softening temperature of the copolymer.

4. Use according to any one of claims 1 to 3 wherein the copolymerizable ether is perfluoro(propyl vinyl ether).

5. Use according to any one of claims 1 to 4 wherein the process includes the additional step of melt extruding the fluorinated copolymer around an electrical conductor to provide electrical insulation therefor.

6. Use according to claim 5 wherein the electrical conductor is a central conductor for a cable.

7. Use according to claim 5 or claim 6 wherein the fluorinated copolymer contains a foaming agent, and the extrusion is conducted at a temperature such that the copolymer expands after exiting the extrusion die, thereby providing a foamed polymeric insulator.

8. Use according to any one of claims 5 to 7 wherein the process includes the further step of placing an outer conductive layer around the polymeric insulator.

## Patentansprüche

1. Anwendung eines Verfahrens zur Verbesserung des dielektrischen Verlustfaktors eines schmelzverarbeitbaren Copolymeren von Tetrafluorethylen mit wenigstens einem copolymerisierbaren Perfluor(n-alkylvinyl)ether, worin die Alkylgruppe 1 bis 5 Kohlenstoffatome aufweist, wie z.B. Perfluor(propylvinylether) (PPVE), worin das PPVE, bezogen auf das Gewicht des Copolymeren, in einer Menge von weniger als 5,0 Gew.-% vorhanden ist und die Menge des Comonomeren niedrig genug ist, daß der Schmelzpunkt des Copolymeren wenigstens 250 °C beträgt, wobei das Verfahren die Fluorierung des Copolymeren oberhalb von Raumtemperatur, bis das Copolymer weniger als 50 Endgruppen, die sich von $-CF_3$ unterscheiden, pro 1 Million Kohlenstoffatome aufweist, umfaßt.

2. Anwendung nach Anspruch 1, bei der das fluorierte Copolymer weniger als 20 Endgruppen, die sich von $-CF_3$ unterscheiden, pro 1 Million Kohlenstoffatome aufweist.

3. Anwendung nach Anspruch 1 oder Anspruch 2, bei der die Temperatur von 200 °C bis unter die Erweichungstemperatur des Copolymeren reicht.

4. Anwendung nach irgendeinem der Ansprüche 1 bis 3, bei der der copolymerisierbare Ether Perfluor(propylvinylether) ist.

5. Anwendung nach irgendeinem der Ansprüche 1 bis 4, bei der das Verfahren die zusätzliche Stufe des Schmelzextrudierens des fluorierten Copolymeren um einen elektrischen Leiter zur Bereitstellung einer elektrischen Isolierung dafür umfaßt.

6. Anwendung nach Anspruch 5, bei der der elektrische Leiter ein zentraler Leiter für ein Kabel ist.

7. Anwendung nach Anspruch 5 oder Anspruch 6, bei der das fluorierte Copolymer ein Schaummittel enthält und die Extrusion bei einer solchen Temperatur durchgeführt wird, daß sich das Copolymer nach Austritt aus der Extrusionsdüse ausdehnt und dabei einen geschäumten polymeren Isolator bereitstellt.

8. Anwendung nach irgendeinem der Ansprüche 5 bis 7, bei der das Verfahren die zusätzliche Stufe des Anbringens einer äußeren leitenden Schicht um den polymeren Isolator umfaßt.

## Revendications

1. Utilisation d'un procédé pour améliorer le facteur de dissipation d'un copolymère, façonnable à l'état fondu, de tétrafluoréthylène et d'au moins un perfluoro(éther de *n*-alkyle et de vinyle) copolymérisable dont le groupe alkyle compte 1 à 5 atomes de carbone tel que, par exemple, le perfluoro(éther de propyle et de vinyle) (PEPV), dans lequel le PEPV est contenu en une quantité inférieure à 5,0 % en poids par rapport au poids du copolymère et la quantité de comonomère est suffisamment faible pour que le point de fusion du copolymère soit d'au moins 250°C, ledit procédé comprenant la fluoration du copolymère à une température supérieure à la température ambiante jusqu'à ce que ledit copolymère ait moins de 50 groupes terminaux autres que $-CF_3$ par million d'atomes de carbone.

**2.** Utilisation selon la revendication 1, dans laquelle le copolymère fluoré contient moins de 20 groupes terminaux autres que -CF$_3$ par million d'atomes de carbone.

**3.** Utilisation selon la revendication 1 ou la revendication 2, dans laquelle ladite température est de 200°C à une température inférieure à la température de ramollissement du copolymère.

**4.** Utilisation selon l'une quelconque des revendications 1 à 3, dans laquelle l'éther copolymérisable est le perfluoro (éther de propyle et de vinyle).

**5.** Utilisation selon l'une quelconque des revendications 1 à 4, dans laquelle le procédé comprend l'étape supplémentaire d'extrusion à l'état fondu du copolymère fluoré autour d'un conducteur électrique pour le doter d'un isolement électrique.

**6.** Utilisation selon la revendication 5, dans laquelle le conducteur électrique est un conducteur central destiné à un câble.

**7.** Utilisation selon la revendication 5 ou la revendication 6, dans laquelle le copolymère fluoré contient un agent d'expansion, et l'extrusion est conduite à une température telle que le copolymère s'expanse après sa sortie de la filière d'extrusion, pour produire ainsi un isolant polymère expansé.

**8.** Utilisation selon l'une quelconque des revendications 5 à 7, dans laquelle le procédé comprend l'étape supplémentaire d'application d'une couche conductrice externe autour de l'isolant polymère.

FIG. 1